# EUROPÄISCHE PATENTSCHRIFT

(11) **EP 1 664 889 B1**
(45) Veröffentlichungstag und Bekanntmachung des Hinweises auf die Patenterteilung: **06.10.2010**
(21) Anmeldenummer: 04725288.7
(22) Anmeldetag: 02.04.2004
(51) Int. Cl.: G02B 21/06, G01T 1/29

(54) **VORRICHTUNG ZUM NACHWEIS VON PHOTONEN EINES LICHTSTRAHLS**
APPARATUS FOR THE DETECTION OF PHOTONS OF A LIGHT BEAM
DISPOSITIF DE DETECTION DE PHOTONS D'UN RAYON LUMINEUX

(30) Priorität: 12.08.2003 DE 10337344; 26.01.2004 DE 102004003993
(43) Veröffentlichungstag der Anmeldung: 07.06.2006
(73) Patentinhaber: Leica Microsystems CMS GmbH, 35578 Wetzlar (DE)
(72) Erfinder: BIRK, Holger, 74909 Meckesheim (DE); STORZ, Rafael, 69115 Heidelberg (DE); SEYFRIED, Volker, 69226 Nussloch (DE)
(74) Vertreter: Naumann, Ulrich
(86) Internationale Anmeldenummer: PCT/DE2004/000718
(87) Internationale Veröffentlichungsnummer: WO 2005/015284

(56) Entgegenhaltungen:
- EP-A- 1 115 021
- WO-A-01/09592
- US-A- 5 886 784
- US-A- 6 097 485
- US-B1- 6 582 903
- PATENT ABSTRACTS OF JAPAN vol. 1996, no. 06, 28. Juni 1996 (1996-06-28) -& JP 08 043739 A (OLYMPUS OPTICAL CO LTD), 16. Februar 1996 (1996-02-16)

## Beschreibung

Die Erfindung betrifft eine Vorrichtung zum Nachweis von Photonen eines Lichtstrahls, der von einer räumlich begrenzten Quelle ausgeht, insbesondere zum Einsatz in einem Fluoreszenzmikroskop, umfassend eine Detektionseinrichtung.

Speziell in der Fluoreszenzmikroskopie ist aufgrund der im Allgemeinen relativ geringen Intensität der Fluoreszenzsignale das Signal/Rausch-Verhältnis ein kritischer Parameter. Dieses Verhältnis wird bestimmt durch die Anzahl der auf den Detektor treffenden Photonen sowie durch die Detektionseffzienz und das Rauschen des Detektors. Die Detektionseffizienz ist durch die Quanteneffizienz des Detektors gegeben, d.h. durch die Wahrscheinlichkeit, dass ein auf den Detektor treffendes Photon tatsächlich ein Detektionssignal erzeugt. Wird der Detektor im "Photon-Counting" Modus betrieben, d.h. jedes Photon erzeugt ein eigenes Detektionssignal, so ergibt sich das Signal/Rausch-Verhältnis im Wesentlichen aus der Poisson-Statistik als √n, wobei n die Anzahl der nachgewiesenen Photonen bezeichnet.

Beim Betrieb eines Detektors im Photon-Counting Modus ist grundsätzlich die Totzeit des Detektors problematisch. Totzeit bezeichnet diejenige Zeit, die vergeht, bis der Detektor nach Detektion eines Photons wieder zum Nachweis eines nächsten Photons zur Verfügung steht, also quasi die Zeit, die der Detektor zur Verarbeitung eines Ereignisses benötigt. Das Dokument WO 01/09592 A1 offenbart solchen Detektor.

Ein in letzter Zeit in zunehmendem Maße eingesetzter Detektor zum Photonennachweis ist die Avalanche-Photodiode (APD), auch als Lawinendiode bezeichnet. Die höchste Nachweiswahrscheinlichkeit besitzen APDs für Licht mit Wellenlängen zwischen ca. 200 nm und 1050 nm, so dass sie sich insbesondere auch für den Einsatz im Bereich von Fluoreszenzlichtmessungen eigenen. Zudem besitzen APDs eine hohe Quanteneffizienz.

Für APDs beträgt die Totzeit ca. 50 ns, während sie im Falle von Photomultipliern etwas geringer ist. Damit im Photon-Counting Modus keine Photonen verloren gehen - und zudem die APDs nicht durch einen zu hohen auftreffenden Strahlungsfluss beschädigt werden - muss eine hinreichend geringe Bestrahlung des Detektors sichergestellt sein. Für den Betrieb eines Fluoreszensmikroskops bedeutet dies beispielsweise, dass die zu untersuchende Probe nur mit einer sehr geringen Beleuchtungslichtstärke angeregt werden kann, was im Ergebnis dazu führt, dass für Bildaufnahmen hoher Qualität, d.h. mit einer hinreichenden Photonenstatistik, eine relativ lange Zeit benötigt wird. Schnelle biochemische Prozesse in der Probe, die auf einer Zeitskala ablaufen, die kürzer ist als die Zeitskala der Bildaufnahme, sind herkömmlichen Fluoreszensmikroskopen folglich nicht zugänglich.

Der vorliegenden Erfindung liegt nun die Aufgabe zugrunde, eine gattungsbildende Vorrichtung zum Nachweis von Photonen eines Lichtstrahls mit einfachen Mitteln derart auszugestalten und weiterzubilden, dass durch die Detektionseinrichtung ein höherer Photonenfluss nachweisbar ist, d.h. die maximale Zählrate, die von der Detektionseinrichtung verarbeitet werden kann, erhöht ist.

Die voranstehende Aufgabe ist durch die Merkmale des Patentanspruchs 1 gelöst.

Erfindungsgemäß ist erkannt worden, dass beim Betrieb eines Detektors im Photon-Counting Modus die Totzeit des Detektors das begrenzende Kriterium im Hinblick auf die maximale Beleuchtungsintensität darstellt. Darüber hinaus ist erkannt worden, dass der im Photon-Counting Modus nachweisbare maximale Photonenfluss im Lichtstrahl durch eine Parallelisierung erhöht werden kann, indem nämlich die nachzuweisenden Photonen auf mehrere Detektoren verteilt werden. Erfindungsgemäß ist dazu im Strahlengang des Lichtstrahls ein Bauteil zur Aufspaltung des Lichtstrahls vorgesehen.

Durch die erfindungsgemäße Vorrichtung kann beispielsweise in einem Fluoreszenzmikroskop die Beleuchtungsintensität und damit verbunden die Aufnahmegeschwindigkeit erhöht werden, so dass die Bilder schneller erstellt werden können und somit auch schnell ablaufende biologische oder biochemische Reaktionen in einer Probe sichtbar gemacht werden können. Ebenso ist es möglich, in der gleichen Aufnahmezeit eine höhere Bildqualität aufgrund erhöhter Photonenstatistik zu erzielen. Beim Einsatz von n Detektoren erhöht sich die maximal mögliche Zählrate um den Faktor n, und das Signal/Rausch-Verhältnis verbessert sich entsprechend um den Faktor √n.

Abgesehen vom Photon-Counting Modus wird durch die erfindungsgemäße Vorrichtung generell der Dynamikbereich der Detektionseinrichtung erhöht. Die Sättigungsschwelle, bei der der auf die Detektionseinrichtung auftreffende Photonenfluss so hoch ist, dass eine weitere Erhöhung des Flusses keine weitere Verstärkung des Ausgangssignals der Detektionseinrichtung bewirkt, wird ebenfalls um den Faktor n der Anzahl der Einzeldetektoren erhöht.

In vorteilhafter Weise könnten Detektoren eingesetzt werden, die zum Einzelphotonennachweis geeignet sind, d.h. mit anderen Worten im Photon-Counting Modus betrieben werden können. Dazu wird der Detektor mittels einer hohen angelegten Spannung im Geigermodus betrieben. Wenn ein Photon auf den Detektor trifft, werden - im Falle einer APD - Elektron-Lochpaare erzeugt, und der Detektorausgang befindet sich in der Sättigung. Das auf diese Weise erzeugte Spannungssignal wird am Detektorausgang abgegriffen und als Ereignis in einen internen Speicher geschrieben, der nach Beendigung der Datenaufnahme ausgelesen wird.

Neben den Avalanche-Photodioden könnten zum Nachweis der Photonen ebenso andere Detektortypen, beispielsweise Photomultiplier oder EMCCDs (Electron Multiplying CCD), eingesetzt werden.

Im Hinblick auf eine kompakte Ausführung könnten die Detektoren ein Array bilden. In der einfachsten Ausführungsform könnte es sich dabei beispielsweise um ein eindimensionales Array im Sinne einer Zeilenanordnung handeln. Im Hinblick auf eine weitergehende Aufteilung der Photonen könnte es sich um ein flächiges Array handeln, bei dem die Detektoren zeilen- und spaltenförmig angeordnet sind.

Im Falle des Einsatzes von EMCCDs könnte sogar ein dreidimensionales Array realisiert werden, indem nämlich einzelne teillichtdurchlässige EMCCDs in mehreren Ebenen hintereinander angeordnet werden. Auftreffende Photonen durchdringen dann mit einer gewissen Wahrscheinlichkeit die erste(n) Ebene(n) und werden erst in einer tieferen Ebene von den EMCCDs nachgewiesen.

Die Aufspaltung des Lichtstrahls könnte auf unterschiedliche Art und Weise erfolgen. Denkbar ist beispielsweise eine Aufspaltung, bei der eine statistische Verteilung der Photonen erzeugt wird. Besonders einfach ließe sich eine derartige Photonenverteilung durch eine einfache Defokussierung des Lichtstrahls erreichen, beispielsweise durch Brechung des Lichtstrahls mittels einer zylinderförmigen Linse.

Es ist des Weiteren eine Aufspaltung des Lichtstrahls denkbar, bei der eine spektrale Verteilung der Photonen erzeugt wird. Im Konkreten könnte eine derartige Aufspaltung beispielsweise durch ein Prisma realisiert sein. Bei einer spektralen Aufspaltung ergibt sich in besonders vorteilhafter Weise die Möglichkeit, die Detektoren in dem Array individuell an einen bestimmten Spektralbereich anzupassen. In Abhängigkeit vom Spektralbereich könnten beispielsweise unterschiedlich sensitive Photokatoden verwendet werden.

Neben den bereits genannten Bauteilen zur Aufspaltung des Lichtstrahls sind grundsätzlich auch elektrooptische Elemente oder elektromechanische Scanner einsetzbar. Insbesondere könnten auch mehrere - unterschiedliche - Bauteile im Lichtstrahl hintereinander angeordnet sein. Auf diese Weise könnten ganz gezielte Verteilungsmuster der Photonen erzeugt werden, beispielsweise zunächst eine Defokussierung in einer Richtung und danach eine spektrale Aufspaltung in einer dazu senkrechten Richtung.

Die für das Photon-Counting notwendige Schwellwertbestimmung sowie ein elektronischer Zähler zum Zählen der nachgewiesenen Photonenereignisse könnten in vorteilhafter Weise nahe am Detektor angeordnet sein. Speziell beim Einsatz von EMCCDs könnte der Zähler sogar unmittelbar auf dem Chip angeordnet sein.

Eine entsprechende Zähllogik zum Zählen der nachgewiesenen Photonenereignisse könnte in vorteilhafter Weise auf einem FPGA (Field Progammable Gate Array) programmiert sein. Addierer könnten sowohl vor als auch nach dem Counter vorgesehen sein. Zudem könnte die gesamte Elektronik monolithisch aufgebaut sein.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung werden auch im Allgemeinen bevorzugte Ausgestaltungen und Weiterbildungen der Lehre erläutert. In der Zeichnung zeigt
- Fig. 1: in einer schematischen Ansicht ein erstes Ausführungsbeispiel der erfindungsgemäßen Vorrichtung mit einer Aufspaltung des Lichtstrahls mit statistischer Photonenverteilung in einer Richtung und einem ein- dimensionalen Detektorarray,
- Fig. 2: in einer schematischen Ansicht ein zweites Ausführungsbeispiel der erfindungsgemäßen Vorrichtung mit einer Aufspaltung des Lichtstrahls mit spektraler Photonenverteilung in einer Richtung und einem eindi- mensionalen Detektorarray,
- Fig. 3: in einer schematischen Ansicht ein drittes Ausführungsbeispiel der erfindungsgemäßen Vorrichtung mit einer Aufspaltung des Lichtstrahls in zwei Richtungen und einem zweidimensionalen Detektorarray und
- Fig. 4: in einer schematischen Ansicht das Ausführungsbeispiel aus Fig. 1, wobei zusätzlich die zugehörige Verarbeitungselektronik dargestellt ist.

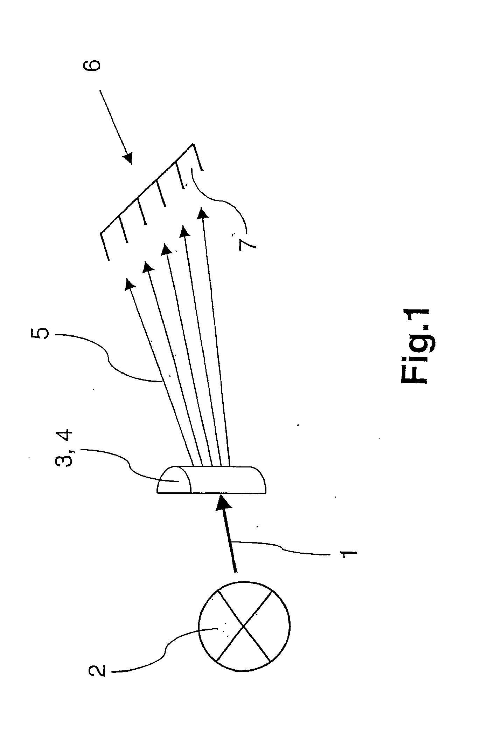

Fig. 1 zeigt einen Lichtstrahl 1, der von einer räumlich begrenzten Lichtquelle 2 ausgeht, wobei es sich bei der Lichtquelle 2 im Konkreten um zur Fluoreszenzemission angeregtes biologisches Probenmaterial handeln könnte. Der Lichtstrahl 1 trifft auf ein optisches Bauteil 3, das aus einem transparenten Material als Linse 4 in Form eines Halbzylinders ausgeführt ist. Der Lichtstrahl 1 durchläuft die zylinderförmige Linse 4 und wird beim Austritt aus der Linse 4 aufgrund von Brechung defokussiert, so dass sich ein divergenter Lichtstrahl 5 innerhalb einer Beleuchtungsebene ergibt, deren Flächennormale die Zylinderachse ist. Innerhalb der Beleuchtungsebene sind die Photonen statistisch verteilt.

Der aufgeweitete Lichtstrahl 5 trifft sodann auf eine Detektionseinrichtung, die mehrere, ein Array 6 bildende Detektoren 7 umfasst. In Fig. 1 sind beispielhaft lediglich fünf Detektoren 7 gezeigt, die zu einem eindimensionalen Array 6 zusammengefasst sind. Dadurch, dass die Photonen des Lichtstrahls 1 nicht in einem Detektor nachgewiesen werden, sondern sich gleichmäßig auf insgesamt fünf Detektoren 7 verteilen, erhöht sich die maximal mögliche Zählrate - und damit die maximale Beleuchtungsintensität - um den Faktor 5, entsprechend der Anzahl der Detektoren 7 des Arrays 6. Das Signal/Rausch-Verhältnis verbessert sich entsprechend um den Faktor √5. Das Signal/Rausch-Verhältnis ist somit - bei konstanter Integrationszeit pro Pixel - deutlich verbessert.

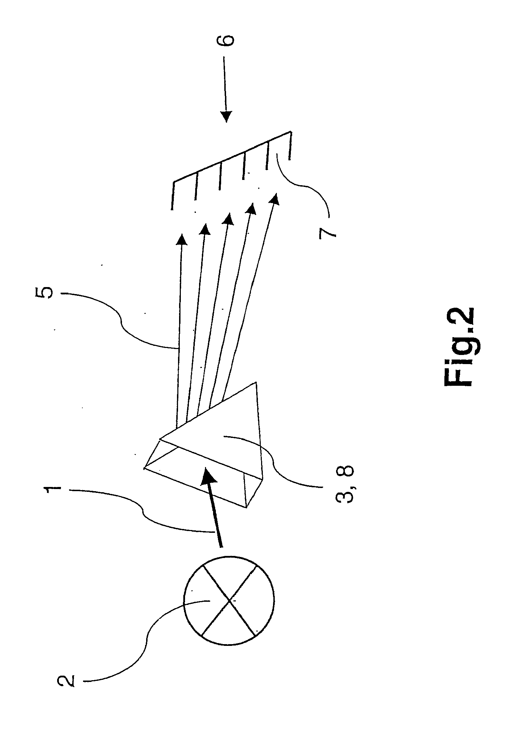

Fig. 2 zeigt eine Ausführungsform, bei der anstelle einer statistischen Photonenverteilung eine spektrale Photonenverteilung erzeugt wird. Die Aufspaltung in spektral unterschiedliche Kanäle in einer Dimension ist durch ein in dem Strahlengang des Lichtstrahls 1 angeordnetes Prisma 8 realisiert. Durch Drehung des Prismas 8 kann die spektrale Aufspaltung optimal an die jeweilige Konfiguration des Detekorarrays 6 angepasst werden.

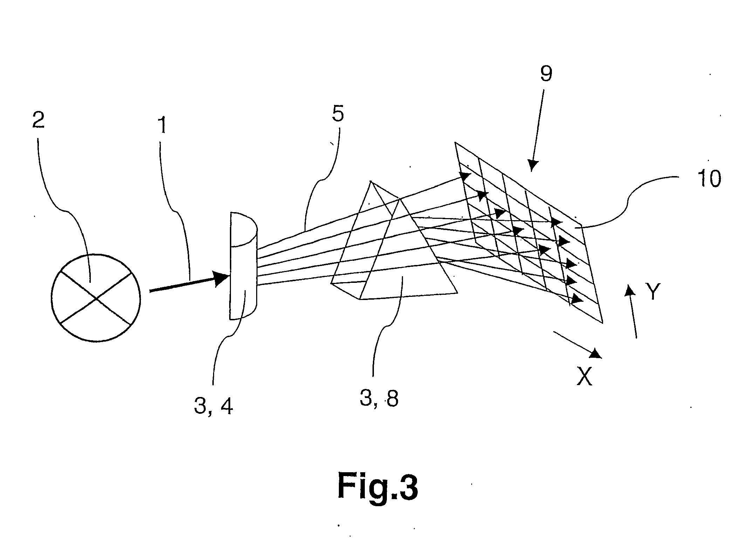

Fig. 3 zeigt eine Ausführungsform, bei der der von der Lichtquelle 2 ausgehende Lichtstrahl 1 zunächst in einer Richtung (X-Richtung) entsprechend den obigen Ausführungen zu Fig. 1 mittels einer zylinderförmigen Linse 4 aufgespalten wird. Der aufgeweitete Lichtstrahl 5 trifft sodann auf ein Prisma 8, durch das der Strahl 5 in einer zur X-Richtung senkrechten Richtung (Y-Richtung) spektral aufgespalten wird. Hinter dem Prisma 8 befindet sich die Detektionseinrichtung, die aus einem zweidimensionalen Detektorarray 9 gebildet ist. Während die auf das Detektorarray 9 auftreffenden Photonen in X-Richtung gleichmäßig verteilt sind, ergibt sich in Y-Richtung eine spektrale Verteilung, wobei niederenergetische Photonen auf in Fig. 3 oben liegende Pixel 10 und höherenergetische Photonen auf weiter unten liegende Pixel 10 treffen.

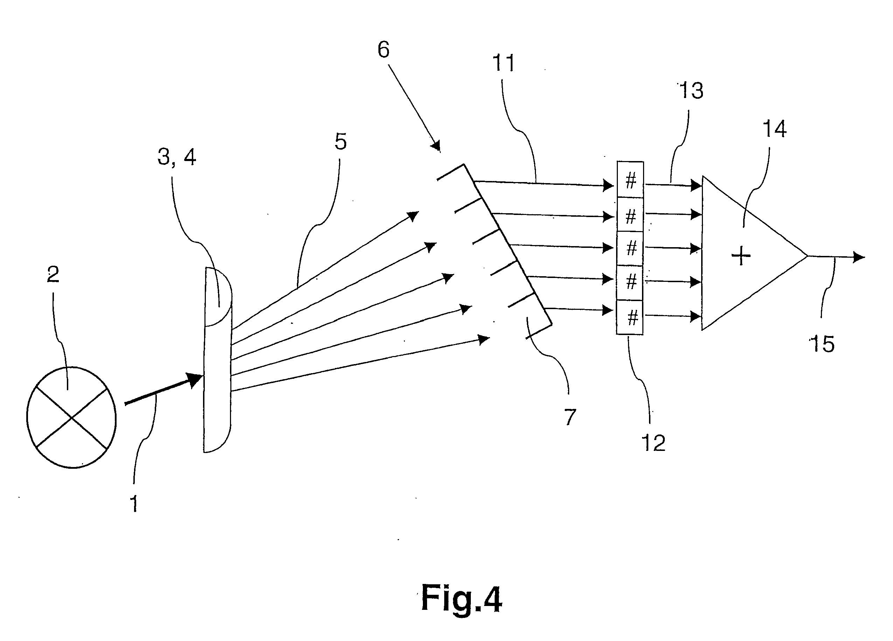

Fig. 4 zeigt schließlich in einer schematischen Ansicht die Ausführungsform der erfindungsgemäßen Vorrichtung gemäß Fig. 1 mit einer statistischen Aufspaltung des Lichtstrahls 1 in einer Richtung und einem eindimensionalen Detektorarray 6. Zusätzlich ist die signalverarbeitende Elektronik dargestellt. Jedem Detektor 7 des Detektorarrays 6 ist über eine elektrische Verbindung 11 ein Photonenzähler 12 zugeordnet, so dass die Photonenereignisse pixelweise ausgelesen und gezählt werden können. Die Ausgänge der Photonenzähler 12 werden über elektrische Verbindungen 13 einem Addierer 14 zugeführt, in dem die nachgewiesenen Photonenereignisse des gesamten Detektorarrays 6 addiert werden. Die auf diese Weise erzeugte Zählrate wird als Ausgangssignal 15 bereitgestellt.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Vorrichtung zum Nachweis von Photonen eines Lichtstrahls (1), der von einer räumlich begrenzten Quelle (2) ausgeht, insbesondere zum Einsatz in einem Fluoreszenzmikroskop, umfassend eine Detektionseinrichtung, wobei die Detektionseinrichtung mindestens zwei Detektoren (7) umfasst und wobei im Strahlengang des Lichtstrahls (1) ein Bauteil (3) vorgesehen ist, mit dem der Lichtstrahl (1) derart aufspaltbar ist, dass sich die Photonen zum Zwecke des Nachweises auf die Detektoren (7) verteilen
**dadurch gekennzeichnet, dass** die Detektoren (7) ein dreidimensionales Array (6, 9) bilden und dass das dreidimensionale Array (6, 9) aus hintereinander angeordneten, teillichtdurchlässigen EMCCDs gebildet ist.

2. Vorrichtung nach Anspruch 1, **dadurch gekennzeichnet, dass** die Detektoren (7) zum Einzelphotonennachweis (single photon counting) geeignet sind.

3. Vorrichtung nach Anspruch 1 oder 2, **dadurch gekennzeichnet, dass** es sich bei den Detektoren (7) um Avalanche-Photodioden (APD), Photomultiplier und/oder EMCCDs (Electron Multipliying CCD) handelt.

4. Vorrichtung nach einem der Ansprüche 1 bis 3, **dadurch gekennzeichnet, dass** das Bauteil (3) eine Aufspaltung des Lichtstrahls (1) mit einer statistischen Verteilung der Photonen, vorzugsweise durch Defokussieren, erzeugt, wobei
das Bauteil (3) eine zylinderförmige Linse (4) sein kann.

5. Vorrichtung nach einem der Ansprüche 1 bis 3, **dadurch gekennzeichnet, dass** das Bauteil (3) eine Aufspaltung des Lichtstrahls (1) mit einer spektralen Verteilung der Photonen erzeugt, wobei
das Bauteil (3) ein Prisma (8) sein kann.

6. Vorrichtung nach einem der Ansprüche 1 bis 3, **dadurch gekennzeichnet, dass** das Bauteil (3) ein elektrooptisches Element oder ein elektromechanischer Scanner ist.

7. Vorrichtung nach einem der Ansprüche 1 bis 6, **dadurch gekennzeichnet, dass** mehrere Bauteile (3) im Strahlengang des Lichtstrahls (1) hintereinander angeordnet sind.

8. Vorrichtung nach einem der Ansprüche 1 bis 7, **dadurch gekennzeichnet, dass** ein elektronischer Zähler (12) zum Photon-Counting nahe am Detektor (7), insbesondere auf dem Chip eines EMCCD, angeordnet ist.

9. Vorrichtung nach einem der Ansprüche 1 bis 8, **dadurch gekennzeichnet, dass** eine Zähllogik zum Photon-Counting in einem FPGA (Field Programmable Gate Array) programmiert ist.

10. Vorrichtung nach Anspruch 8 oder 9, **dadurch gekennzeichnet, dass** vor und/oder nach dem Zähler (12) ein Addierer (14) vorgesehen ist.

11. Vorrichtung nach einem der Ansprüche 1 bis 10, **dadurch gekennzeichnet, dass** die zugehörige Elektronik monolithisch aufgebaut ist.

## Claims

1. Device for detecting photons of a light beam (1) emanating from a three-dimensionally bounded source (2), in particular for use in a fluorescence microscope, comprising a detection device, wherein the detection device comprises at least two detectors (7) and wherein provided in the beam path of the light beam (1) is a component (3) by which the light beam (1) can be split in such a manner that the photons are distributed on the detectors (7) for purposes of detection, **characterised in that** the detectors (7) form a three-dimensional array (6, 9) and that the three-dimensional array (6, 9) is formed from semi-translucent EMCCDs disposed one behind the other.

2. Device according to claim 1, **characterised in that** the detectors (7) are suitable for detecting single photons (single photon counting).

3. Device according to claim 1 or 2, **characterised in that** the detectors (7) are avalanche photodiodes (APD), photomultipliers and/or EMCCDs (electron multiplying CCDs).

4. Device according to any on of claims 1 to 3, **characterised in that** the component (3) produces splitting of the light beam (1) with a statistical distribution of the photons, preferably by defocusing, wherein the component (3) can be a cylindrical lens (4).

5. Device according to any one of claims 1 to 3, **characterised in that** the component (3) produces splitting of the light beam (1) with a spectral distribution of photons, wherein the component (3) can be a prism (8).

6. Device according to any one of claims 1 to 3, **characterised in that** the component (3) is an electro-optical element or an electromechanical scanner.

7. Device according to any one of claims 1 to 6, **characterised in that** several components (3) are positioned in succession in the beam path of the light beam (1).

8. Device according to any one of claims 1 to 7, **characterised in that** an electronic counter (12) for counting photons is arranged near the detector (7), in particular on the chip of an EMCCD.

9. Device according to any one of claims 1 to 8, **characterised in that** a counting logic for counting photons is programmed into an FPGA (Field Programmable Gate Array).

10. Device according to claim 8 or 9, **characterised in that** an adder (14) is provided upstream and/or downstream of the counter (12).

11. Device according to any one of claims 1 to 10, **characterised in that** the associated electronic system is of monolithic form.

## Revendications

1. Dispositif de décèlement des photons d'un rayon de lumière (1), qui est émis par une source (2) délimitée dans l'espace, destiné en particulier à être utilisé dans un microscope fluorescent, comportant un dispositif de détection, ledit dispositif de détection comportant au moins deux détecteurs (7) et un composant (3) étant prévu dans la trajectoire du rayon de lumière (1), au moyen duquel le rayon de lumière (1) peut être partagé de telle sorte que les photons se répartissent sur les détecteurs (7) en vue de leur décèlement,
**caractérisé en ce que** les détecteurs (7) forment un réseau (6, 9) tridimensionnel et **en ce que** le réseau (6, 9) tridimensionnel est formé par des EMCCD partiellement transparents, disposés les uns derrière les autres.

2. Dispositif selon la revendication 1, **caractérisé en ce que** les détecteurs (7) sont aptes à déceler des photons individuels (single photon counting).

3. Dispositif selon la revendication 1 ou 2, **caractérisé en ce que** les détecteurs (7) sont des photodiodes à avalanche (APD), des photomultiplicateurs et/ou des EMCCD (Electron Multiplying Charge Coupled Device).

4. Dispositif selon l'une quelconque des revendications 1 à 3, **caractérisé en ce que** le composant (3) génère un partage du rayon de lumière (1) avec une répartition statistique des photons, de préférence par défocalisation, le composant (3) pouvant être une lentille (4) cylindrique.

5. Dispositif selon l'une quelconque des revendications 1 à 3, **caractérisé en ce que** le composant (3) génère un partage du rayon de lumière (1) avec une répartition spectrale des photons, le composant (3) pouvant être un prisme (8).

6. Dispositif selon l'une quelconque des revendications 1 à 3, **caractérisé en ce que** le composant (3) est un élément électro-optique ou un scanner électromécanique.

7. Dispositif selon l'une quelconque des revendications 1 à 6, **caractérisé en ce que** plusieurs composants (3) sont agencés les uns derrière les autres dans la trajectoire du rayon de lumière (1).

8. Dispositif selon l'une quelconque des revendications 1 à 7, **caractérisé en ce qu'**un compteur (12) électronique, destiné au comptage des photons, est monté à proximité du détecteur (7), en particulier sur la puce d'un EMCCD.

9. Dispositif selon l'une quelconque des revendications 1 à 8, **caractérisé en ce qu'**une logique de comptage pour le comptage des photons est programmée dans un FPGA (Field Programmable Gate Array).

10. Dispositif selon la revendication 8 ou 9, **caractérisé en ce qu'**un additionneur (14) est prévu en amont et/ou en aval du compteur (12).

11. Dispositif selon l'une quelconque des revendications 1 à 10, **caractérisé en ce que** l'électronique correspondante est conçue sous forme monolithique.
